# EUROPEAN PATENT APPLICATION

(11) **EP 4 349 791 A1**
(43) Date of publication of application: **10.04.2024**
(21) Application number: 22815635.2
(22) Date of filing: 16.03.2022
(51) Int. Cl.: C02F 1/42, C02F 1/461, C25B 13/08, C25B 9/00, C25B 9/13, C25B 15/02, C25B 15/08, C25B 1/26

(54) **METHOD AND APPARATUS FOR PRODUCING SODIUM HYPOCHLORITE SOLUTION**

(30) Priority: 31.05.2021 JP 2021091725
(71) Applicant: De Nora Permelec Ltd, Fujisawa-shi, Kanagawa 252-0816 (JP)
(72) Inventor: DOMON Hiroki, Fujisawa-shi, Kanagawa 252-0816 (JP); SUDO Shigeki, Fujisawa-shi, Kanagawa 252-0816 (JP); OTSU Hideo, Fujisawa-shi, Kanagawa 252-0816 (JP)
(74) Representative: Gill Jennings & Every LLP
(86) International application number: PCT/JP2022/012034
(87) International publication number: WO 2022/254878

(57) **Abstract**

To provide a production method and a production apparatus of a sodium hypochlorite solution that can produce a sodium hypochlorite solution with a high available chlorine concentration at a low cost using an on-site facility. In production of a sodium hypochlorite solution by feeding secondary salt water as an aqueous sodium chloride solution, in an electrolyzer 10 comparted into an anode chamber 2 and a cathode chamber 3 by an ion-exchange membrane 1, to the anode chamber and, after electrolysis, introducing an anolyte and a generated chlorine gas in the anode chamber and an aqueous sodium hydroxide solution generated in the cathode chamber into a reaction tank 20 to allow the anolyte, the chlorine gas, and the generated aqueous sodium hydroxide solution as a catholyte to react in the reaction tank, a primary salt water generation step of dissolving raw salt G containing sodium chloride as a main component in purified water B to generate primary salt water, and a chelating step of chelating the primary salt water to generate secondary salt water A are included, in which a decomposition rate of salt ranges from 80 to 95%.

## Description

### TECHNICAL FIELD

The present invention relates to a production method of a sodium hypochlorite solution and a production apparatus of a sodium hypochlorite solution (hereinafter, also simply referred to as "production method" and "production apparatus"). The present invention specifically relates to a technique for obtaining sodium hypochlorite at a higher concentration in a method and an apparatus that each produce a sodium hypochlorite solution on-site by using an ion-exchange membrane for a diaphragm of an electrolyzer and mixing electrolysis products except for hydrogen, generated in the electrolyzer, in a reaction tank.

### BACKGROUND ART

Sodium hypochlorite is utilized as a typical bleaching agent or disinfecting agent in various circles such as treatment of water and sewer and treatment of waste water. Production methods for sodium hypochlorite are commonly a method of production by reaction of chlorine and an aqueous sodium hydroxide solution obtained by electrolysis of common salt water in a reaction tank, and a method of directly producing sodium hypochlorite in a non-diaphragm electrolyzer by electrolysis of an aqueous sodium chloride solution in a non-diaphragm electrolyzer.

In the latter method, it is difficult to obtain a high-concentration sodium hypochlorite solution because the electrolyzer has no diaphragm and thus sodium hypochlorite generated is reduced to common salt on a cathode and the sodium hypochlorite generated is anodized and converted into sodium chlorate having no effective oxidation power. Therefore, applications of sodium hypochlorite with this production method are commonly those in which no high concentration is required, such as heat exchange water in a power generating plant, shaft cooling water in a rotary equipment, and prevention of growth/attachment of living organisms in sea water in ballast water treatment, as well as water and sewage treatment, and wastewater treatment.

On the other hand, an application to which the former production method is applied is representatively a common production method of high-concentration sodium hypochlorite in a salt electrolysis plant. A salt electrolysis plant necessarily includes a salt water purification system for highly removing metallic impurities and unnecessary anions contained in raw material salt and raw material water in order to maintain a stable and high-efficiency plant operation, and a system for re-purification by decomposing and removing hypochlorous acid and chloric acid contained in salt water after electrolysis in order to recycle common salt water decreased in concentration after electrolysis, and facilities are increased in scale.

A main object of a salt electrolysis plant is not to produce sodium hypochlorite, but to produce sodium hydroxide and chlorine gas which have many industrial applications, and such a plant is often a plant included in a petrochemical complex and is often a large-scale plant producing tens of thousands to hundreds of thousands of tons a year in terms of sodium hydroxide. The number of salt electrolysis plants is predominantly small as compared with the number of water treatment plants and the like requiring high-concentration sodium hypochlorite, and thus there arise a need for transporting chlorine gas or sodium hypochlorite necessary for sterilization of clean water to a water treatment plant and storing it in the plant. Therefore, elements of danger, such as human-caused disasters and environmental destruction due to liquid leakage or the like from a storage facility, are always possessed. In particular, a traffic accident by a tank lorry for use in transportation of chlorine gas causes a serious accident where chlorine gas is scattered to the environment, to occur in countries, and the movement to tighten the law on transportation of chlorine gas is activated.

In such circumstances, an on-site-type production method of high-concentration sodium hypochlorite is proposed in which a small electrolytic apparatus for production of sodium hypochlorite is disposed in a physical plant utilizing sodium hypochlorite such as a water treatment plant, and a required amount of sodium hypochlorite is produced when needed.

For example, Patent Document 1 describes a technique for producing an alkali hypochlorite solution having a predetermined available chlorine concentration, by performing electrolysis with addition of an alkali chloride solution to an anode chamber and of water to a cathode chamber, by use of an electrolyzer with a cation-exchange membrane between an anode and a cathode, and mixing an anolyte discharged from the electrolyzer, a catholyte as a caustic alkali solution, and chlorine gas.

Patent Document 2 describes a technique in which, when sodium hypochlorite is produced by performing electrolysis, in an electrolyzer comparted into an anode chamber and a cathode chamber by an ion-exchange membrane, with feeding of an aqueous alkali metal chloride solution to the anode chamber and feeding of pure water to the cathode chamber and by introducing an anolyte and chlorine gas generated in the anode chamber and a produced aqueous alkali metal hydroxide solution in the cathode chamber after the electrolysis into a reaction tank, an ion-exchange membrane for generation of high-concentration caustic alkali for electrolysis of common salt or potassium chloride is used as the ion-exchange membrane, and also water is added to the anolyte or aqueous alkali metal hydroxide solution before introduction into the reaction tank, or to a mixture of the anolyte, chlorine gas and aqueous alkali metal hydroxide solution after introduction into the reaction tank.

### RELATED ART DOCUMENTS

### PATENT DOCUMENTS

[Patent Document 1] JPS61-18495A
[Patent Document 2] JP2013-096001A

### SUMMARY OF THE INVENTION

### PROBLEMS TO BE SOLVED BY THE INVENTION

In a general electrolysis plant of common salt, sodium hypochlorite is produced by allowing chlorine gas and sodium hydroxide obtained by electrolyzing common salt water to react. Salt water as an anolyte is circulated between an anode chamber in an electrolyzer and an anolyte reservoir, and at the same time, secondary salt water purified in a salt water purifier is fed to the anode chamber, anolyte circulation piping, or the anolyte reservoir. In addition, an aqueous sodium hydroxide solution as a catholyte is circulated between a cathode chamber in the electrolyzer and a catholyte reservoir, and at the same time, purified water is fed to the cathode chamber, catholyte circulation piping, or the catholyte reservoir. The reaction in the electrolyzer is represented by the following formula.

2NaCl + 2H₂O = 2NaOH + Cl₂ + H₂

In this regard, a reaction between sodium hydroxide and chlorine gas generated in the electrolyzer generates a sodium hypochlorite solution in a reaction tank. This reaction in the reaction tank is represented by the following formula.

2NaOH + Cl₂ = NaClO + NaCl + H₂O

Such a method for generating a sodium hypochlorite solution by contacting sodium hydroxide and chlorine gas can easily generate a sodium hypochlorite solution high in available chlorine concentration and low in common salt concentration, as compared with the techniques described in Patent Document 1 and Patent Document 2. The decomposition rate of salt is about 40%. The salt water discharged from the anode chamber, in which common salt is consumed by electrolysis, is recycled through a dechlorination treatment step. The dechlorination treatment step uses large amounts of chemical liquids such as hydrochloric acid, an aqueous sodium hydroxide solution and disodium sulfite, and many instruments such as a tank and a pump corresponding to these liquids are also required. Therefore, the footprint, initial cost, and running cost increase when such a facility is applied to an on-site-type sodium hypochlorite production facility.

According to the technique described in Patent Document 1, an alkali hypochlorite liquid having an available chlorine concentration of 2 to 6% by mass can be produced by mixing an anolyte as an alkali chloride solution discharged from the electrolyzer with the cation-exchange membrane, a catholyte as a caustic alkali solution, and chlorine gas. The anolyte is mixed, together with the catholyte and the chlorine gas, in the alkali hypochlorite solution, and thus no dechlorination treatment step is needed. However, this method, in which not only a sodium hypochlorite solution is diluted with the anolyte, but also the concentration of an aqueous sodium hydroxide solution generated in the cathode is low, thus cannot allow for an increase in available chlorine concentration in the sodium hypochlorite solution.

According to the technique described in Patent Document 2, sodium hypochlorite can be produced by a reaction of chlorine gas, an anolyte and a catholyte discharged from the anode chamber and the cathode chamber comparted with the ion-exchange membrane, in the reaction tank. This method also allows no dechlorination treatment step to be needed as in the case of Patent Document 1. This method, while allows an aqueous sodium hydroxide solution generated in the cathode to have a high concentration and enables a sodium hypochlorite solution having a higher available chlorine concentration than that in Patent Document 1 to be generated, cannot produce a sodium hypochlorite solution having a low common salt concentration because salt water discharged from the anode chamber, in which common salt is consumed by electrolysis, flows into the reaction tank. Furthermore, chloric acid included in the anolyte is also mixed with the sodium hypochlorite solution, and thus a disadvantage is also that only a sodium hypochlorite solution having a high chloric acid concentration can be generated as compared with a method for contacting chlorine gas and an aqueous sodium hydroxide solution.

The grade of a sodium hypochlorite solution is defined by the available chlorine concentration and the concentrations of free alkali, bromic acid, chloric acid and sodium chloride in the section of sodium hypochlorite in city water in the Japan Water Works Association Standard (JWWA K120: 2008). The third-grade to which sodium hypochlorite having an available chlorine concentration of 12% or more corresponds is designated as encompassing a salt concentration of 12.5% or less. Therefore, if sodium hypochlorite corresponding to the third-grade is demanded by a user, a problem is that the method recited in Patent Document 2 cannot deal with such a demand.

An increase in available chlorine concentration in a sodium hypochlorite solution leads to a decrease in solubility of salt. When a high-concentration sodium hypochlorite solution is generated or the sodium hypochlorite solution generated is low in temperature, there is also a risk of induction of any trouble such as clogging of piping due to deposition of common salt. A reduction in common salt concentration by centrifugation under cooling of a sodium hypochlorite solution can be made, but requires an excessive facility and also increases footprint and cost, and incorporation into an on-site facility is not preferable.

An object of the present invention is to solve the above problems and to provide a production method and a production apparatus of a sodium hypochlorite solution, which can produce a sodium hypochlorite solution with high available chlorine concentration at a low cost by an on-site facility.

### MEANS FOR SOLVING THE PROBLEMS

While it is also considered for dealing with the above problems that the decomposition rate of salt is increased as much as possible to thereby reduce the salt concentration in a sodium hypochlorite solution, another problem caused is that, even if the decomposition rate of salt is simply increased, the common salt concentration in an anolyte is reduced to thereby cause an increase in electrolyzer voltage and blister formation in an ion-exchange membrane, making continued stable operating difficult. The decomposition rate of salt also has an influence on the amount of water transferred via an ion-exchange membrane, and thus water balance in the system is also remarkably changed from that of a conventional process and conventional findings are difficult to apply as they are.

Furthermore, impurities due to raw salt are also contained in salt water to be fed to an anolyte. Among them, typical impurities, calcium and magnesium, can be removed by a salt water purifier. However, for example, bromine contained in raw salt cannot be removed by a salt water purifier and is incorporated as bromic acid having carcinogenic properties, into an anolyte and also a sodium hypochlorite solution, and thus the standard value is set also in the section of sodium hypochlorite in city water in the Japan Water Works Association Standard (JWWA K120: 2008). Accordingly, selection of appropriate raw salt is also an issue for an increase in decomposition rate of salt.

The present inventors have made intensive studies in view of such circumstances and, as a result, have found that a high-concentration sodium hypochlorite solution can be produced by improving a step of generating an aqueous sodium chloride solution from raw salt and increasing the decomposition rate of salt in production of a sodium hypochlorite solution by a reaction of an anolyte, chlorine gas and an aqueous sodium hydroxide solution obtained in electrolysis, in a reaction tank, leading to completion of the present invention.

In other words, the production method of a sodium hypochlorite solution of the present invention includes, in production of a sodium hypochlorite solution by feeding secondary salt water as an aqueous sodium chloride solution, in an electrolyzer comparted into an anode chamber and a cathode chamber by an ion-exchange membrane, to the anode chamber and, after electrolysis, introducing an anolyte and a generated chlorine gas in the anode chamber and a generated aqueous sodium hydroxide solution in the cathode chamber into a reaction tank to allow the anolyte, the chlorine gas, and the generated aqueous sodium hydroxide solution as a catholyte to react in the reaction tank,
a primary salt water generation step of dissolving raw salt containing sodium chloride as a main component in purified water to generate primary salt water, and
a chelating step of chelating the primary salt water, to generate the secondary salt water, characterized in that
a decomposition rate of salt ranges from 80 to 95%.

In the production method of the present invention, a bilayer membrane configured from a sulfonic acid layer and a carboxylic acid layer is preferably used as the ion-exchange membrane.

In addition, in the production method of the present invention, it is preferable that a first switching means that switches whether or not the anolyte is introduced from the anode chamber into the reaction tank be provided between the anode chamber and the reaction tank, to produce a sodium hypochlorite solution without introducing a part or the total amount of the anolyte into the reaction tank, and it is also preferable that a second switching means that switches whether or not the chlorine gas is introduced from the anode chamber into the reaction tank be provided between the anode chamber and the reaction tank, to perform production of a sodium hypochlorite solution with feeding of a part or the total amount of the chlorine gas to a facility where chlorine gas is used.

Moreover, in the production method of the present invention, two or more of the electrolyzers can be used to feed the chlorine gas obtained from one or more of the electrolyzers to a facility where chlorine gas is used, and a sodium hypochlorite solution can be produced using the chlorine gas obtained from one or more of the electrolyzers.

Furthermore, in the production method of the present invention, it is preferable that purified water be introduced into the reaction tank to adjust a concentration of a sodium hypochlorite solution. In the production method of the present invention, an available chlorine concentration of a sodium hypochlorite solution generated in the reaction tank can be 8% or more.

Furthermore, in the production method of the present invention, it is preferable to include a cation exchange step of treating raw material water with a cation-exchange resin to generate the purified water. In this case, it is also preferable to use a water softener in the cation exchange step.

Furthermore, in the production method of the present invention, the first switching means and/or the second switching means can be activated by a switching operation or an external signal based on an instruction from an automatic control apparatus communicable with the exterior of a production facility.

Furthermore, in the production method of the present invention, a sodium hypochlorite solution can be produced on-site in the vicinity of a facility where a sodium hypochlorite solution is used.

Furthermore, in the production method of the present invention, it is also preferable that an anolyte reservoir that reserves the anolyte and a catholyte reservoir that reserves the catholyte be provided in the vicinity of the electrolyzer, and bottoms of the anolyte reservoir and the catholyte reservoir be disposed above a position at half the height of the electrolyzer, to respectively circulate the anolyte and the catholyte between the anolyte reservoir and the anode chamber and between the catholyte reservoir and the cathode chamber due to the difference in gravity.

The production apparatus of a sodium hypochlorite solution of the present invention is an apparatus comprising an electrolyzer comparted into an anode chamber and a cathode chamber by an ion-exchange membrane and supplied with secondary salt water as an aqueous sodium chloride solution, and a reaction tank into which products in the anode chamber and the cathode chamber after electrolysis are introduced, and producing a sodium hypochlorite solution by a reaction in the reaction tank, characterized in that
the apparatus comprises
   a primary salt water generation section that dissolves raw salt containing sodium chloride as a main component, in purified water to generate primary salt water, and
   a chelating section that chelates the primary salt water to generate the secondary salt water, and,
the apparatus is operated at a decomposition rate of salt ranging from 80 to 95%.

In the production apparatus of the present invention, the ion-exchange membrane is preferably a bilayer membrane configured from a sulfonic acid layer and a carboxylic acid layer.

In addition, in the production apparatus of the present invention, it is preferable that a first switching means that switches whether or not the anolyte in the anode chamber is introduced from the anode chamber into the reaction tank be provided between the anode chamber and the reaction tank, and it is also preferable that a second switching means that switches whether or not the chlorine gas generated in the anode chamber is introduced from the anode chamber into the reaction tank be provided between the anode chamber and the reaction tank.

Moreover, the production apparatus of the present invention can comprise two or more of the electrolyzers, and a chlorine gas feed path for feeding chlorine gas obtained from one or more of the electrolyzers to a facility where chlorine gas is used.

Furthermore, the production apparatus of the present invention preferably has a purified water introduction path for introducing purified water into the reaction tank. The production apparatus of the present invention is suitably used for production of a sodium hypochlorite solution having an available chlorine concentration of 8% or more.

Furthermore, the production apparatus of the present invention preferably comprises a cation exchange treatment section that treats raw material water with a cation-exchange resin to generate the purified water. In this case, the cation exchange treatment section also preferably includes a water softener.

Furthermore, in the production apparatus of the present invention, the first switching means and/or the second switching means can be formed to be operable by a switching operation or an external signal via an automatic control apparatus communicable with the exterior of a production facility.

Furthermore, the production apparatus of the present invention is suitably placed in the vicinity of a facility where a sodium hypochlorite solution is used and used for production of a sodium hypochlorite solution on-site.

Furthermore, in the production apparatus of the present invention, it is preferable that the apparatus have an anolyte reservoir that reserves anolyte and a catholyte reservoir that reserves catholyte in the vicinity of the electrolyzer, and bottoms of the anolyte reservoir and the catholyte reservoir be disposed above a position at half the height of the electrolyzer.

### EFFECTS OF THE INVENTION

According to the present invention, it is possible to provide a production method and a production apparatus of a sodium hypochlorite solution, in which a sodium hypochlorite solution high in available chlorine concentration can be produced at a low cost by an on-site facility.

### BRIEF DESCRIPTION OF THE DRAWINGS

FIG. 1 is an apparatus configuration diagram illustrating one example of a production apparatus of a sodium hypochlorite solution for use in the present invention.
FIG. 2 is an apparatus configuration diagram schematically illustrating another mode of a production apparatus of a sodium hypochlorite solution for use in the present invention.
FIG. 3 is a graph representing a relationship between consumption ratio of salt and the decomposition rate of salt in the present invention, based on a production apparatus of a sodium hypochlorite solution having a dechlorination treatment step.

### MODE FOR CARRYING OUT THE INVENTION

Hereinafter, embodiments of the present invention will be described with reference to the drawings, but the present invention is not intended to be limited thereto.

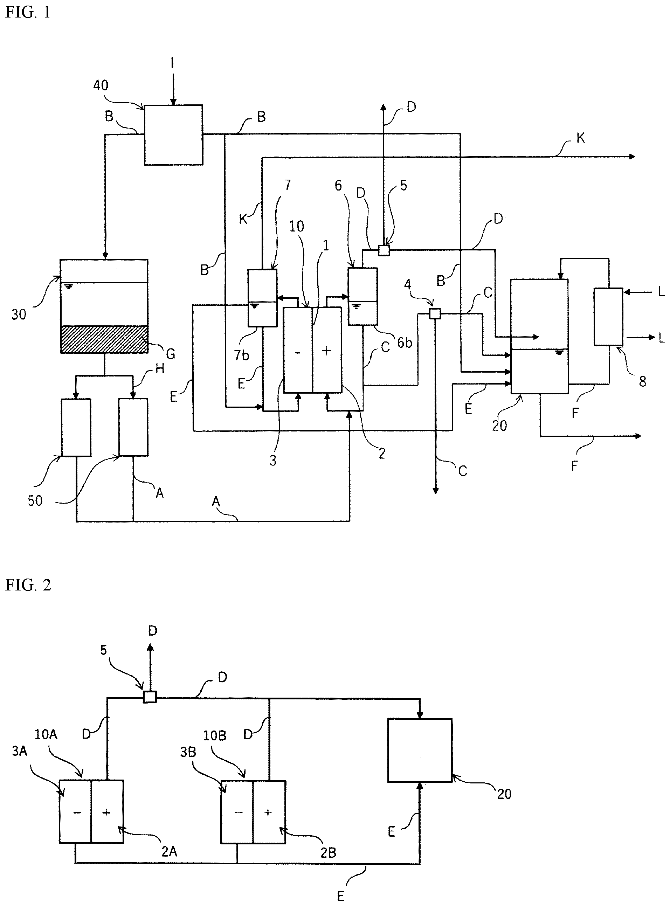

FIG. 1 is an apparatus configuration diagram illustrating one example of a production apparatus of a sodium hypochlorite solution for use in the present invention. FIG. 2 is an apparatus configuration diagram schematically illustrating another mode of a production apparatus of a sodium hypochlorite solution for use in the present invention.

The present invention relates to an improved method and apparatus that can produce a sodium hypochlorite solution on-site in the vicinity of a facility where a sodium hypochlorite solution is used. In the present invention, a high-concentration sodium hypochlorite solution is produced by feeding secondary salt water as an aqueous sodium chloride solution, in an electrolyzer comparted into an anode chamber and a cathode chamber by an ion-exchange membrane, to the anode chamber and, after electrolysis, introducing an anolyte and a generated chlorine gas in the anode chamber and a generated aqueous sodium hydroxide solution in the cathode chamber into a reaction tank to allow the anolyte, the chlorine gas, and the generated aqueous sodium hydroxide solution as a catholyte to react in the reaction tank.

In the present invention, when the decomposition rate of salt is in the range from 80 to 95% and also secondary salt water to be fed to the anode chamber is generated from raw salt, raw salt containing sodium chloride as a main component is dissolved in purified water to generate primary salt water (primary salt water generation step) and then the primary salt water is chelated to generate secondary salt water (chelating step). Thus, a sodium hypochlorite solution high in available chlorine concentration can be produced by an on-site facility at a low cost.

In the present invention, the decomposition rate of salt in production of the sodium hypochlorite solution is required to range from 80 to 95%, and preferably ranges from 82 to 93%. If the decomposition rate of salt is less than 80%, a high-concentration sodium hypochlorite solution is difficult to generate in the case of production of sodium hypochlorite by introduction of the anolyte into the reaction tank without drainage of the anolyte. In addition, if the decomposition rate of salt is less than 80% in the case of production of sodium hypochlorite under drainage of the anolyte as described below in detail, no economic efficiency can be ensured. On the other hand, if the decomposition rate of salt is more than 95%, the voltage in an electrolyzer is remarkably raised and no operation can be substantially continued even in the case of introduction of the anolyte into the reaction tank or even in the case of drainage of the anolyte.

In the case where the anolyte is not introduced into the reaction tank, but drained, the temperature and the pH of the anolyte drained is respectively from 50°C to 80°C and from 4 to 5, and chlorine gas is dissolved in the anolyte. It is not preferable to directly send the anolyte to a wastewater treatment facility, in terms of heat resistance of the facility and generation of chlorine odor. Therefore, the anolyte, when drained, necessarily is aerated for expelling chlorine, undergoes steps of cooling, pH adjustment, and the like, and is sent to a wastewater treatment facility. Accordingly, it is preferable in consideration of economic efficiency to increase the decomposition rate of salt and reduce the amount drained.

In the case where a dechlorination treatment step is included, the anolyte undergoing a dechlorination treatment is recycled for dissolution of salt, and thus the consumption ratio of salt can be kept low. As described above, chemical liquids such as hydrochloric acid, an aqueous sodium hydroxide solution and disodium sulfite are used in large amounts in the dechlorination treatment step, and thus corresponding instruments such as tanks and pumps are also increased in the case where a facility for the dechlorination treatment step is provided. Therefore, in the case where this facility is applied to an on-site-type sodium hypochlorite production facility, the footprint is increased and the initial cost and the running cost are higher. In the present invention, while neither the dechlorination treatment step is used, nor corresponding instruments and chemical liquids are thus used, and therefore the footprint, the initial cost and the running cost can be suppressed, salt included in the anolyte is incorporated into a sodium hypochlorite solution as a product or drained and thus discharged outside the system, resulting in an increase in consumption ratio of salt.

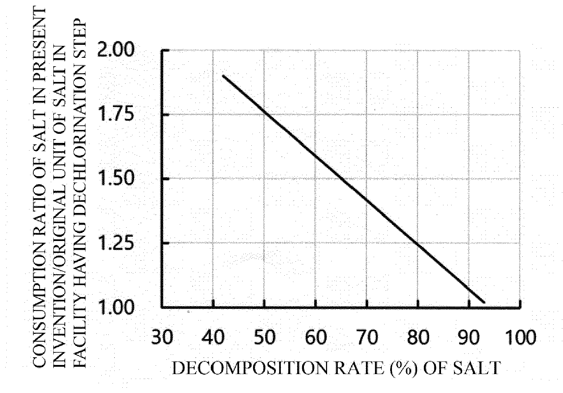

It has been found, as a result of a detailed comparison between the merits of cost reduction by eliminating the dechlorination treatment step and reducing the amount of use of chemical liquids, and the disadvantages of increasing the consumption ratio of salt and increasing the cost associated with the treatment for drainage of the anolyte, that the amount of increasing the consumption ratio of salt is preferably 25% or less in terms of cost effectiveness as compared with the case of the presence of the dechlorination treatment step. FIG. 3 is a graph representing a relationship between the original unit ratio of salt and the decomposition rate of salt in the present invention, based on a production apparatus of a sodium hypochlorite solution, having a dechlorination treatment step. According to FIG. 3, the decomposition rate of salt is required to be 80% or more in order that the amount of an increase in consumption ratio of salt to be 25% or less as compared with the case of the facility having the dechlorination treatment step.

The generation of secondary salt water in the present invention can be performed by providing a salt water production unit for producing secondary salt water from raw salt, in parallel with a main section of the production apparatus of a sodium hypochlorite solution, and a compact production plant usable on-site can be provided. Specifically, the salt water production unit in the present invention includes a primary salt water generation section that dissolves raw salt containing sodium chloride as a main component in purified water to generate primary salt water, and a chelating section that performs chelating of the primary salt water to thereby generate secondary salt water, as a basic configuration.

### [Primary salt water generation step]

As described above, in the present invention, when secondary salt water A is generated, raw salt G containing sodium chloride as a main component is first dissolved in purified water B to generate primary salt water H as saturated salt water at room temperature. Such dissolution of the raw salt G in the purified water B can be performed in a salt dissolution tank 30.

Any solar salt and rock salt may be used as the raw salt G. It is more preferable to perform further purification with the raw salt G as raw material and then use purified salt from which metallic impurities such as calcium ions and magnesium ions are removed to some extent. Since calcium and magnesium as typical impurities in salt water deteriorate performance of the ion-exchange membrane, it is preferable to purify salt water to be fed to the anode chamber and reduce the concentration of such impurities to a level corresponding to the usage standard of the ion-exchange membrane. A chelate resin may be here used for removal of calcium and magnesium serving as cations. Since bromine included in raw salt is incorporated as bromic acid into a sodium hypochlorite solution produced, the bromine ion concentration in raw salt is preferably less than 100 mg/kg, particularly about 69 mg/kg or less from the viewpoint that a sodium hypochlorite solution having a bromic acid concentration corresponding to the first-grade shown in JWWA K120:2008 is obtained.

The purified water B here used may be industrial purified water usually used, or may be purified water B generated from raw material water I in an on-site facility, by providing a cation exchange treatment section 40 that treats raw material water with a cation-exchange resin to generate purified water, in advance of the primary salt water generation section. In other words, the present invention may include a cation exchange step of treating raw material water I with a cation-exchange resin to generate purified water, in advance of the primary salt water generation step. This cation exchange step can obtain purified water B as soft water lower in hardness than the raw material water I by adsorption and removal of calcium ions, magnesium ions and other heavy metal ions contained in the raw material water and exchange of these ions with sodium ions or hydrogen ions.

The raw material water I for use in the cation exchange step can be tap water, well water (groundwater), industrial water or the like available in an on-site production place in the vicinity of a facility where a sodium hypochlorite solution is used.

The cation-exchange resin for use in the cation exchange step is not particularly limited, and may be of Na-type or H-type.

In the present invention, the cation exchange treatment section 40 used for performing the cation exchange step can also be a water softener using the cation-exchange resin, rather than the cation-exchange resin by itself. If the cation-exchange resin is degraded, regeneration may be made by a method involving exchanging the cation-exchange resin degraded with a new cation-exchange resin, or by a method of regeneration with a regeneration mechanism attached to the water softener, and salt in the case of use of the water softener.

### [Chelating step]

In the present invention, the primary salt water H obtained in the step is chelated to thereby generate secondary salt water A. The primary salt water H can be chelated to thereby remove calcium ions and magnesium ions brought from the raw salt G, from the primary salt water, and thus generate clean secondary salt water A. The primary salt water H can be chelated in a salt water purifier 50.

Next, a process for producing a sodium hypochlorite solution in the present invention is described. First, electrolysis is performed in the production apparatus illustrated in FIG. 1, by feeding the secondary salt water A generated above, to an anode chamber 2 and feeding the purified water B to a cathode chamber 3 in an electrolyzer 10 comparted into the anode chamber 2 and the cathode chamber 3 by an ion-exchange membrane 1. Thereafter, an anolyte C and chlorine (Cl₂) gas D generated, in the anode chamber 2, and an aqueous sodium hydroxide solution E generated, in the cathode chamber 3, after the electrolysis, are introduced into a reaction tank 20, and the anolyte C, chlorine gas D and the aqueous sodium hydroxide solution E are allowed to react in the reaction tank 20, to thereby produce a sodium hypochlorite solution F. The anolyte C is here salt water reduced in concentration to, for example, a concentration of less than 100 g/L after the electrolysis.

According to the present invention, the above configuration enables a sodium hypochlorite solution high in available chlorine concentration to be stably and efficiently produced at a low cost in a compact on-site production facility, and enables sodium hypochlorite to be easily produced in a place where such sodium hypochlorite is consumed.

In the case where the anolyte C is introduced into the reaction tank 20, a sodium hypochlorite solution generated is diluted and thus the available chlorine concentration cannot be increased. Thus, it is necessary to increase the concentration of the aqueous sodium hydroxide solution E as a catholyte and thus decrease the amount of water in the reaction tank 20 and increase the concentration of the sodium hypochlorite solution. When the anolyte C is introduced into the reaction tank 20 and the decomposition rate of salt is 80 to 95%, at least the concentration of the aqueous sodium hydroxide solution is necessarily 22% by mass or more in order to obtain an available chlorine concentration of 12%. Since an on-site facility may also be placed in a cold region, it is necessary to also consider solidification of the aqueous sodium hydroxide solution during operation stopping. The aqueous sodium hydroxide solution, when has a concentration of more than 30% by mass, is solidified at 0°C or more. Although the aqueous sodium hydroxide solution can also be diluted by feeding purified water before operation stopping, a disadvantage is that the amount of purified water used is increased and also management of a proper amount of purified water added is needed. Therefore, the range of the concentration of the aqueous sodium hydroxide solution in the case of introduction of the anolyte C into the reaction tank 20 is preferably from 22 to 30% by mass.

On the other hand, when the decomposition rate of salt is 80 to 95% without introduction of the anolyte C into the reaction tank 20, the concentration of the aqueous sodium hydroxide solution is necessarily at least 16% by mass or more in order to obtain an available chlorine concentration of 12%. If the concentration of the aqueous sodium hydroxide solution is increased, the sodium hypochlorite solution can be increased in concentration. However, if the concentration of the aqueous sodium hydroxide solution is more than 23% by mass, salt may be deposited in the sodium hypochlorite solution. Therefore, the range of the concentration of the aqueous sodium hydroxide solution in the case of introduction of the anolyte C into the reaction tank 20 is preferably from 16 to 23% by mass.

In addition, in the present invention, a first switching means 4 that switches whether or not the anolyte C is introduced from the anode chamber 2 into the reaction tank 20 is preferably provided between the anode chamber 2 and the reaction tank 20, as illustrated, and thus a sodium hypochlorite solution can be produced without introducing a part or the total amount of the anolyte C into the reaction tank 20. The first switching means 4 capable of controlling introduction of the anolyte C can be thus provided, to thereby allow a sodium hypochlorite solution different in common salt concentration and chloric acid concentration to be selected and produced depending on the requirement.

Moreover, in the present invention, a second switching means 5 that switches whether or not the chlorine gas D is introduced from the anode chamber 2 into the reaction tank 20 can be provided between the anode chamber 2 and the reaction tank 20, to thereby allow production of a sodium hypochlorite solution to be performed with feeding of a part or the total amount of the chlorine gas D to a facility where chlorine gas is used. The second switching means 5 capable of controlling introduction of the chlorine gas D can be thus provided, to thereby allow production of a sodium hypochlorite solution to be performed with feeding of the chlorine gas D to a physical plant depending on the requirement.

The first and second switching means 4 and 5 are each configured from, for example, a hand valve, an electrically operated valve or an air driven valve. For example, in the case where the first and second switching means 4 and 5 are each configured from an electrically operated valve or an air driven valve, such first and second switching means 4 and 5 can be each configured to be operable by a switching operation or an external signal based on an instruction from an automatic control apparatus communicable with the exterior of a production facility. Such an automatic control apparatus here used can be, for example, MELSEC-Q series manufactured by Mitsubishi Electric Corporation or SIMATIC S7 manufactured by SIEMENS AG, but not limited thereto. For example, in the case where production of a sodium hypochlorite solution is performed in one facility of a water treatment plant such as a water purification plant, the automatic control apparatus can be activated based on an external signal from a central control system of such a water treatment plant. The first switching means 4 and the second switching means 5 may be activated with an in-place switch or the like by an in-place operator respectively depending on the measurement results of, for example, the sodium hypochlorite solution and common salt concentrations, and depending on the requirement of injection of chlorine gas to treated water.

In addition, in the present invention, a purified water introduction path for introducing the purified water B into the reaction tank 20 is preferably provided, and thus the concentration of the sodium hypochlorite solution can be adjusted by feeding of the purified water B to the reaction tank 20 in generation of the sodium hypochlorite solution in the reaction tank 20. For example, when a sodium hypochlorite solution having an available chlorine concentration of 15% is produced, the available chlorine concentration can be 8% by matching the concentrations of the anolyte C and the aqueous sodium hydroxide solution E as a catholyte and feeding the purified water B. A high available chlorine concentration leads to an increase in amount of chloric acid generated according to decomposition. It is effective in terms of suppression of an increase in chloric acid concentration to dilute the sodium hypochlorite solution in a hot region or in the summer months where decomposition of sodium hypochlorite is fast. When a sodium hypochlorite solution having an available chlorine concentration of 1 to 8% is produced, a monolayer ion-exchange membrane configured from a sulfonic acid layer high in resistance to impurities in salt water can be used, and a purification step of salt water can be simplified if purified salt having few impurities is used.

According to the present invention, a sodium hypochlorite solution having an available chlorine concentration of 8% or more, in particular, 12 to 15% can be easily produced in the reaction tank 20.

It is preferable in the present invention to provide an anolyte reservoir 6 that reserves the anolyte C and a catholyte reservoir 7 that reserves the aqueous sodium hydroxide solution E as a catholyte in the vicinity of the electrolyzer 10, and dispose bottoms 6b and 7b of the anolyte reservoir 6 and the catholyte reservoir 7 above a position at half the height of the electrolyzer 10, as illustrated. Such placement can allow piping to be communicated between the anolyte reservoir 6 and the anode chamber 2 and between the catholyte reservoir 7 and the cathode chamber 3, to thereby circulate the anolyte C and the aqueous sodium hydroxide solution E respectively between the anolyte reservoir 6 and the anode chamber 2 and between the catholyte reservoir 7 and the cathode chamber 3 due to the difference in gravity, even if a flow means such as a pump is not provided. A flow means such as pump may also be further provided between the anolyte reservoir 6 and the anode chamber 2 and between the catholyte reservoir 7 and the cathode chamber 3, without any limitation.

In the present invention, the ion-exchange membrane 1 used in the electrolyzer 10 may be any one, and is preferably a bilayer membrane configured from a sulfonic acid layer (anode side) and a carboxylic acid layer (cathode side). Such a bilayer membrane is used to thereby allow the carboxylic acid layer to inhibit diffusion of hydroxide ions diffused from a cathode side, and thus enable high-efficiency production to be made. Examples of such a bilayer membrane include Nafion (registered trademark) N2050 manufactured by Chemours, FLEMION (registered trademark) F-9010 manufactured by AGC Inc., and Aciplex (registered trademark) F7001 manufactured by Asahi Kasei Corporation.

In the production apparatus for use in the present invention, an anode obtained by forming a cover with an electrode catalyst substance containing an oxide of a platinum-group metal, onto a metal substrate such as titanium, can be provided in the anode chamber 2 of the electrolyzer 10 comparted with the ion-exchange membrane 1. In this regard, a cathode made of nickel, stainless steel or titanium, or obtained by forming a cover with a cathode active substance that not only leads to a reduction in hydrogen overvoltage, but also is excellent in long-term durability, onto such a metal, can be provided in the cathode chamber 3.

In the present invention, the aqueous sodium hydroxide solution E, while is controlled in concentration and flow rate depending on an objective amount of the sodium hypochlorite solution generated, can be fed to the electrolyzer 10. In the case where the purified water B is introduced into the electrolyzer 10, the purified water B can also be similarly controlled in flow rate depending objective amount and concentration of the sodium hypochlorite solution generated.

The aqueous sodium hydroxide solution E and hydrogen gas K generated are taken out from the upper portion of the cathode chamber 3, in which the aqueous sodium hydroxide solution E as a catholyte is fed to the reaction tank 20 and the hydrogen gas K is discharged outside. An anolyte C including the aqueous sodium chloride solution lowered in concentration by electrolysis, and the chlorine gas D are taken out from the upper portion of the anode chamber 2, and are fed to the reaction tank 20 respectively via first and second switching means 4 and 5.

A sodium hypochlorite solution F is generated in the reaction tank 20 by a reaction of chlorine and sodium hydroxide. The sodium hypochlorite solution F taken out from the reaction tank 20 is here not only taken out as a product, but also fed to and cooled in a cooling apparatus 8 using cooling water L and thereafter circulated in the reaction tank 20 by a pump, and therefore not only an increase in temperature of the electrolyzer 10 can be prevented, but also decomposition of sodium hypochlorite generated can be prevented.

FIG. 2 is an apparatus configuration diagram schematically illustrating another mode of a production apparatus of a sodium hypochlorite solution, for use in the present invention. As illustrated, in the present invention, two or more electrolyzers, two electrolyzers 10A and 10B in the example illustrated, are disposed, and chlorine gas D obtained from one or more of the electrolyzers, one electrolyzer 10A in the example illustrated, can be fed to a facility where chlorine gas is used and also chlorine gas D obtained from one or more of the remaining electrolyzers, one electrolyzer 10B in the example illustrated, can be used to produce a sodium hypochlorite solution. In other words, a chlorine gas feed path for feeding chlorine gas obtained from some electrolyzer(s) among a plurality of electrolyzers, to a facility where chlorine gas is used, can be provided to thereby simultaneously perform feeding of chlorine gas to a facility where chlorine gas is used and production of a sodium hypochlorite solution.

For example, in production of a sodium hypochlorite solution from products in the electrolyzer 10A and the electrolyzer 10B in the facility illustrated in FIG. 2, chlorine gas generated in an anode chamber 2A and an anode chamber 2B, and an aqueous sodium hydroxide solution E generated in a cathode chamber 3A and a cathode chamber 3B are mixed in the reaction tank 20 to produce a sodium hypochlorite solution. While a sodium hypochlorite solution having an available chlorine concentration of 12% or more is produced, the second switching means 5 configured from an automatic valve can be operated to take chlorine gas D generated in the electrolyzer 10A, outside the system. A switching means (not illustrated) that switches whether or not a catholyte is introduced can also be placed and operated between the cathode chamber 3A and the reaction tank 20, to take an aqueous sodium hydroxide solution E generated in the cathode chamber 3A, outside the system, and reserve the solution. The chlorine gas D thus taken outside the system can be directly injected to treated water in a water purification plant or the like and then used.

### EXAMPLES

Hereinafter, the present invention will be more specifically described with reference to Examples.

Production of a sodium hypochlorite solution was performed in an apparatus having a configuration illustrated in FIG. 1. The electrolysis area was 8000 cm² and the electrolysis current was 2400 A in the electrolyzer. F-9010 manufactured by AGC Inc., as a bilayer membrane configured from a sulfonic acid layer and a carboxylic acid layer, was used as the ion-exchange membrane of the electrolyzer.

After raw salt having a bromine ion concentration of 50 mg/kg was dissolved in purified water to generate primary salt water, the primary salt water obtained was chelated to generate secondary salt water. When the bromine ion concentration in the raw salt was 50 mg/kg, the bromic acid concentration in a sodium hypochlorite solution in Example 1 described below was 15 mg/kg and the bromic acid concentration in a sodium hypochlorite solution in Example 2 described below was 18 mg/kg, and these were below 50 mg/kg corresponding to a predetermined value of the first-grade with respect to sodium hypochlorite in city water in the Japan Water Works Association Standard (JWWA K120: 2008). Bromine ions were anions, and thus could not be removed by a chelate resin used in salt water purification.

The pH before purification of salt water in which raw salt was dissolved with purified water was 7.8. In purification of the salt water, DIAION (registered trademark) CR11 manufactured by Mitsubishi Chemical Corporation, as an iminodiacetic acid-type chelate resin, was used. The concentration of calcium and magnesium in the salt water before purification was 16 mg/L, and the concentration of calcium and magnesium in the salt water after purification was 10 µg/L.

After the secondary salt water purified and 25% by mass of an aqueous sodium hydroxide solution were respectively loaded to the anode chamber and the cathode chamber, an operation was started. The temperature of an electrolytic solution during the operation was 75°C, and purified water was fed to the cathode chamber to adjust the concentration of the aqueous sodium hydroxide solution in the cathode chamber. The amount of the aqueous sodium hydroxide solution fed to the reaction tank was adjusted so that the concentration of the aqueous sodium hydroxide solution in a sodium hypochlorite solution was 1%. Cooling was performed so that the temperature of the reaction tank was 30°C. A first switching means that switched whether or not the anolyte was introduced from the anode chamber into the reaction tank was provided between the anode chamber and the reaction tank, and each test in Examples and Comparative Examples was performed by switching introduction and discharge of the anolyte into and from the reaction tank by an automatic valve, and at the same time adjusting the amount of purified water fed to the cathode chamber.

In each of Examples, purified water was used for dissolution of raw salt and addition to the cathode chamber. While ion exchange water could also be used instead of purified water, purified water was preferably utilized in terms of cost. The silica concentrations in the purified water and the secondary salt water were each 12 mg/L. Electrolysis was here continued for two months with intentional adjustment so that the silica concentration in the secondary salt water was 40 mg/L, and the amount of chlorine generated and the voltage were stable. While the concentration of the aqueous sodium hydroxide solution was here adjusted by feeding the purified water to the cathode chamber, the concentration of the sodium hypochlorite solution could also be adjusted by feeding the purified water to the reaction tank.

Piping was communicated between the anolyte reservoir and the anode chamber and between the catholyte reservoir and the cathode chamber, and a flow means such as a pump was not provided. Bottoms of the anolyte reservoir and the catholyte reservoir were disposed above a position at half the height of the electrolyzer, and thus the anolyte and the catholyte were favorably circulated between the respective reservoirs and the electrolyzer, and all the operating voltage, the operating temperature and the operating pressure were stable. On the other hand, bottoms of the respective reservoirs were disposed below a position at half the height of the electrolyzer, and favorable circulation was not obtained and the operating pressure was not stable.

### [Example 1]

A sodium hypochlorite solution was produced with introduction of the anolyte into the reaction tank. When the decomposition rate of salt was 80.4% and the concentration of the aqueous sodium hydroxide solution in the catholyte was 28.0% by mass, the available chlorine concentration, the common salt concentration and the chloric acid concentration in the resulting sodium hypochlorite solution were respectively 12.2% by mass, 13.5% by mass and 0.18% by mass. The amount of the anolyte drained was zero because of operating with introduction of the anolyte into the reaction tank.

### [Example 2]

A sodium hypochlorite solution was produced with introduction of the anolyte into the reaction tank. When the decomposition rate of salt was 89.4% and the concentration of the aqueous sodium hydroxide solution in the catholyte was 26.2% by mass, the available chlorine concentration, the common salt concentration and the chloric acid concentration in the resulting sodium hypochlorite solution were respectively 12.8% by mass, 13.0% by mass and 0.17% by mass. The amount of the anolyte drained was zero because of operating with introduction of the anolyte into the reaction tank.

### [Example 3]

A sodium hypochlorite solution was produced with drainage of the anolyte. When the decomposition rate of salt was 81.1% and the concentration of the aqueous sodium hydroxide solution in the catholyte was 16.3% by mass, the available chlorine concentration, the common salt concentration and the chloric acid concentration in the resulting sodium hypochlorite solution were respectively 12.3% by mass, 10.4% by mass and 0.06% by mass. The amount of the anolyte drained was 9.5 L/hour.

### [Example 4]

A sodium hypochlorite solution was produced with drainage of the anolyte. When the decomposition rate of salt was 89.1% and the concentration of the aqueous sodium hydroxide solution in the catholyte was 16.0% by mass, the available chlorine concentration, the common salt concentration and the chloric acid concentration in the resulting sodium hypochlorite solution were respectively 12.0% by mass, 10.1% by mass and 0.06% by mass. The amount of the anolyte drained was 6.5 L/hour.

### [Example 5]

A sodium hypochlorite solution was produced with introduction of a portion of the anolyte into the reaction tank and at the same time drainage of a portion of the anolyte. The ratio of the amount of the anolyte introduced into the reaction tank and the amount thereof drained was 1:1. When the decomposition rate of salt was 86.7% and the concentration of the aqueous sodium hydroxide solution in the catholyte was 17.4% by mass, the available chlorine concentration, the common salt concentration and the chloric acid concentration in the resulting sodium hypochlorite solution were respectively 12.1% by mass, 11.0% by mass and 0.08% by mass. The amount of the anolyte drained was 3.7 L/hour.

### [Comparative Example 1]

A sodium hypochlorite solution was produced with introduction of the anolyte into the reaction tank. When the decomposition rate of salt was 45.1% and the concentration of the aqueous sodium hydroxide solution in the catholyte was 32.3% by mass, the available chlorine concentration, the common salt concentration and the chloric acid concentration in the resulting sodium hypochlorite solution were respectively 5.5% by mass, 18.4% by mass and 0.12% by mass. The amount of the anolyte drained was zero because of operating with introduction of the anolyte into the reaction tank.

The decomposition rate of salt was low in Comparative Example 1 as compared with Example 1 and Example 2, and the available chlorine concentration in the sodium hypochlorite solution was low and the common salt concentration therein was high.

### [Comparative Example 2]

A sodium hypochlorite solution was produced with drainage of the anolyte. When the decomposition rate of salt was 47.0% and the concentration of the aqueous sodium hydroxide solution in the catholyte was 16.3% by mass, the available chlorine concentration, the common salt concentration and the chloric acid concentration in the resulting sodium hypochlorite solution were respectively 12.3% by mass, 10.1% by mass and 0.04% by mass. The amount of the anolyte drained was 27.8 L/hour.

In Comparative Example 2, the amount drained was large as compared with Example 3 and Example 4.

### [Comparative Example 3]

A sodium hypochlorite solution was produced with drainage of the anolyte. When the decomposition rate of salt was 96.2%, voltage rise occurred, and no operation until the concentration of the sodium hypochlorite solution was stabilized could be maintained. The concentration of the aqueous sodium hydroxide solution in the catholyte during operation stopping was 18.1% by mass. The amount drained for 30 minutes until stopping from attainment of the decomposition rate of salt to 96% was 3.5 L/hour.

In Comparative Example 3, the amount drained was small, but no stable operation could be made.

### [Comparative Example 4]

A sodium hypochlorite solution was produced with introduction of the anolyte into the reaction tank. When the decomposition rate of salt was 77.9% and the concentration of the aqueous sodium hydroxide solution in the catholyte was 29.3% by mass, the available chlorine concentration, the common salt concentration and the chloric acid concentration in the resulting sodium hypochlorite solution were respectively 11.3% by mass, 14.9% by mass and 0.14% by mass. The amount of the anolyte drained was zero because of operating with introduction of the anolyte into the reaction tank.

In Comparative Example 4, the decomposition rate of salt was low and thus an available chlorine concentration of 12% in the sodium hypochlorite solution could not be obtained.

### [Comparative Example 5]

A sodium hypochlorite solution was produced with drainage of the anolyte. When the decomposition rate of salt was 75.6% and the concentration of the aqueous sodium hydroxide solution in the catholyte was 16.5% by mass, the available chlorine concentration, the common salt concentration and the chloric acid concentration in the sodium hypochlorite solution were respectively 12.1% by mass, 10.3% by mass and 0.06% by mass. The amount of the anolyte drained was 11.7 L/hour.

In Comparative Example 5, the decomposition rate of salt was low and thus the amount drained was larger than those in Example 3 and Example 4.

**[Table 1]**

| | Anolyte | Decomposition rate (%) of salt | Concentration (% by mass) of caustic soda in cathode | Concentration (% by mass) of each component in sodium hypochlorite solution | | | Amount (L/hour) of anolyte drained | Stability |
|---|---|---|---|---|---|---|---|---|
| | | | | Available chlorine concentration | Common salt concentration | Chloric acid concentration | | |
| Example 1 | Introduction into reaction tank | 80.4 | 28.0 | 12.2 | 13.5 | 0.18 | 0 | No voltage rise |
| Example 2 | Introduction into reaction tank | 89.4 | 26.2 | 12.8 | 13.0 | 0.17 | 0 | No voltage rise |
| Example 3 | Drainage | 81.1 | 16.3 | 12.3 | 10.4 | 0.06 | 9.5 | No voltage rise |
| Example 4 | Drainage | 89.1 | 16.0 | 12.0 | 10.1 | 0.06 | 6.5 | No voltage rise |
| Example 5 | Introduction into reaction tank: Drainage = 1:1 | 86.7 | 17.4 | 12.1 | 11.0 | 0.08 | 3.7 | No voltage rise |
| Comparative Example 1 | Introduction into reaction tank | 45.1 | 32.3 | 5.5 | 18.4 | 0.12 | 0 | No voltage rise |
| Comparative Example 2 | Drainage | 47.0 | 16.3 | 12.3 | 10.1 | 0.04 | 27.8 | No voltage rise |
| Comparative Example 3 | Drainage | 96.2 | 18.1 | - | - | - | 3.5 | Voltage rise observed, and no maintainable operation |
| Comparative Example 4 | Introduction into reaction tank | 77.9 | 29.3 | 11.3 | 14.9 | 0.14 | 0 | No voltage rise |
| Comparative Example 5 | Drainage | 75.6 | 16.5 | 12.1 | 10.3 | 0.06 | 11.7 | No voltage rise |

It has been found from the foregoing that, even in the case where the anolyte is introduced into the reaction tank or drained, the decomposition rate of salt is needed to be 80% or more for production of a high-concentration sodium hypochlorite solution. On the other hand, it has been confirmed that a decomposition rate of salt of more than 95% leads to remarkable voltage rise and no operation can be continued, and thus the upper limit value of the decomposition rate of salt is needed to be 95% in terms of operation stability.

### DESCRIPTION OF SYMBOLS

1 ion-exchange membrane
2, 2A, 2B anode chamber
3, 3A, 3B cathode chamber
4 first switching means
5 second switching means
6 anolyte reservoir
6b bottom of anolyte reservoir
7 catholyte reservoir
7b bottom of catholyte reservoir
8 cooling apparatus
10, 10A, 10B electrolyzer
20 reaction tank
30 salt dissolution tank
40 cation exchange treatment section
50 salt water purifier
A secondary salt water
B purified water
C anolyte
D chlorine gas
E aqueous sodium hydroxide solution
F sodium hypochlorite solution
G raw salt
H primary salt water
I raw material water
K hydrogen gas
L cooling water

## Claims

1. A production method of a sodium hypochlorite solution, the method comprising,
in production of a sodium hypochlorite solution by feeding secondary salt water as an aqueous sodium chloride solution, in an electrolyzer comparted into an anode chamber and a cathode chamber by an ion-exchange membrane, to the anode chamber and, after electrolysis, introducing an anolyte and a generated chlorine gas in the anode chamber and a generated aqueous sodium hydroxide solution in the cathode chamber into a reaction tank to allow the anolyte, the chlorine gas, and the generated aqueous sodium hydroxide solution as a catholyte to react in the reaction tank,
a primary salt water generation step of dissolving raw salt containing sodium chloride as a main component in purified water to generate primary salt water, and
a chelating step of chelating the primary salt water to generate the secondary salt water, **characterized in that**
a decomposition rate of salt ranges from 80 to 95%.

2. The production method of a sodium hypochlorite solution according to claim 1, wherein a bilayer membrane configured from a sulfonic acid layer and a carboxylic acid layer is used as the ion-exchange membrane.

3. The production method of a sodium hypochlorite solution according to claim 1 or 2, wherein a first switching means that switches whether or not the anolyte is introduced from the anode chamber into the reaction tank is provided between the anode chamber and the reaction tank to produce a sodium hypochlorite solution without introducing a part or the total amount of the anolyte into the reaction tank.

4. The production method of a sodium hypochlorite solution according to any one of claims 1 to 3, wherein a second switching means that switches whether or not the chlorine gas is introduced from the anode chamber to the reaction tank is provided between the anode chamber and the reaction tank to perform production of a sodium hypochlorite solution with feeding of a part or the total amount of the chlorine gas to a facility where chlorine gas is used.

5. The production method of a sodium hypochlorite solution according to any one of claims 1 to 4, wherein two or more of the electrolyzers are used to feed the chlorine gas obtained from one or more of the electrolyzers to a facility where chlorine gas is used, and a sodium hypochlorite solution is produced using the chlorine gas obtained from one or more of the electrolyzers.

6. The production method of a sodium hypochlorite solution according to any one of claims 1 to 5, wherein purified water is introduced into the reaction tank to adjust a concentration of a sodium hypochlorite solution.

7. The production method of a sodium hypochlorite solution according to any one of claims 1 to 6, wherein an available chlorine concentration of a sodium hypochlorite solution generated in the reaction tank is 8% or more.

8. The production method of a sodium hypochlorite solution according to any one of claims 1 to 7, comprising a cation exchange step of treating raw material water with a cation-exchange resin to generate the purified water.

9. The production method of a sodium hypochlorite solution according to claim 8, wherein a water softener is used in the cation exchange step.

10. The production method of a sodium hypochlorite solution according to claim 3, wherein the first switching means is activated by a switching operation or an external signal based on an instruction from an automatic control apparatus communicable with the exterior of a production facility.

11. The production method of a sodium hypochlorite solution according to claim 4, wherein the second switching means is activated by a switching operation or an external signal based on an instruction from an automatic control apparatus communicable with the exterior of a production facility.

12. The production method of a sodium hypochlorite solution according to any one of claims 1 to 11, wherein a sodium hypochlorite solution is produced on-site in the vicinity of a facility where a sodium hypochlorite solution is used.

13. The production method of a sodium hypochlorite solution according to any one of claims 1 to 12, wherein an anolyte reservoir that reserves the anolyte and a catholyte reservoir that reserves the catholyte are provided in the vicinity of the electrolyzer, and bottoms of the anolyte reservoir and the catholyte reservoir are disposed above a position at half the height of the electrolyzer to respectively circulate the anolyte and the catholyte between the anolyte reservoir and the anode chamber and between the catholyte reservoir and the cathode chamber due to the difference in gravity.

14. A production apparatus of a sodium hypochlorite solution, the apparatus being an apparatus comprising an electrolyzer comparted into an anode chamber and a cathode chamber by an ion-exchange membrane and supplied with secondary salt water as an aqueous sodium chloride solution, and a reaction tank into which products in the anode chamber and the cathode chamber after electrolysis are introduced, and producing a sodium hypochlorite solution by a reaction in the reaction tank, **characterized in that**
the apparatus comprises
a primary salt water generation section that dissolves raw salt containing sodium chloride as a main component in purified water to generate primary salt water, and
a chelating section that chelates the primary salt water to generate the secondary salt water, and
the apparatus is operated at a decomposition rate of salt ranging from 80 to 95%.

15. The production apparatus of a sodium hypochlorite solution according to claim 14, wherein the ion-exchange membrane is a bilayer membrane configured from a sulfonic acid layer and a carboxylic acid layer.

16. The production apparatus of a sodium hypochlorite solution according to claim 14 or 15, comprising a first switching means that switches whether or not the anolyte in the anode chamber is introduced from the anode chamber into the reaction tank between the anode chamber and the reaction tank.

17. The production apparatus of a sodium hypochlorite solution according to any one of claims 14 to 16, comprising a second switching means that switches whether or not the chlorine gas generated in the anode chamber is introduced from the anode chamber into the reaction tank between the anode chamber and the reaction tank.

18. The production apparatus of a sodium hypochlorite solution according to any one of claims 14 to 17, comprising two or more of the electrolyzers, and a chlorine gas feed path for feeding chlorine gas obtained from one or more of the electrolyzers to a facility where chlorine gas is used.

19. The production apparatus of a sodium hypochlorite solution according to any one of claims 14 to 18, comprising a purified water introduction path for introducing purified water into the reaction tank.

20. The production apparatus of a sodium hypochlorite solution according to any one of claims 14 to 19, for use in production of a sodium hypochlorite solution having an available chlorine concentration of 8% or more.

21. The production apparatus of a sodium hypochlorite solution according to any one of claims 14 to 20, comprising a cation exchange treatment section that treats raw material water with a cation-exchange resin to generate the purified water.

22. The production apparatus of a sodium hypochlorite solution according to claim 21, wherein the cation exchange treatment section comprises a water softener.

23. The production apparatus of a sodium hypochlorite solution according to claim 16, wherein the first switching means is formed to be operable by a switching operation or an external signal via an automatic control apparatus communicable with the exterior of a production facility.

24. The production apparatus of a sodium hypochlorite solution according to claim 17, wherein the second switching means is formed to be operable by a switching operation or an external signal via an automatic control apparatus communicable with the exterior of a production facility.

25. The production apparatus of a sodium hypochlorite solution according to any one of claims 14 to 24, wherein the apparatus is placed in the vicinity of a facility where a sodium hypochlorite solution is used and used for production of a sodium hypochlorite solution on-site.

26. The production apparatus of a sodium hypochlorite solution according to any one of claims 14 to 25, wherein an anolyte reservoir that reserves anolyte and a catholyte reservoir that reserves catholyte are provided in the vicinity of the electrolyzer, and bottoms of the anolyte reservoir and the catholyte reservoir are disposed above a position at half the height of the electrolyzer.
